# EUROPEAN PATENT SPECIFICATION

(11) **EP 3 305 642 B1**
(45) Date of publication and mention of the grant of the patent: **12.06.2019**
(21) Application number: 17194780.7
(22) Date of filing: 04.10.2017
(51) Int. Cl.: B62M 7/02, B62K 11/04, B62J 13/00, B62K 25/28, B62J 1/12, B62J 15/00

(54) **STRADDLED VEHICLE**
GRÄTSCHSITZFAHRZEUG
VÉHICULE À ENFOURCHER

(30) Priority: 04.10.2016 JP 2016196790
(43) Date of publication of application: 11.04.2018
(73) Proprietor: Yamaha Hatsudoki Kabushiki Kaisha, Iwata-shi Shizuoka 438-8501 (JP)
(72) Inventor: OISHI, Takayuki, Iwata-shi, Shizuoka 438-8501 (JP)
(74) Representative: Grünecker Patent- und Rechtsanwälte PartG mbB

(56) References cited:
- JP-A- H1 035 562
- Anonymous: "Ducati Diavel Titanium side at EICMA 2014 - Indian Autos blog", , 26 March 2015 (2015-03-26), XP055452195, Retrieved from the Internet: URL:https://indianautosblog.com/2014/11/du cati-diavel-titanium-eicma-2014-155149/duc ati-diavel-titanium-side-at-eicma-2014 [retrieved on 2018-02-19]

## Description

The present invention relates to a straddled vehicle. More particularly, the present invention relates a straddled vehicle including a rear arm having a mud guard attached thereto.

Straddled vehicles including a mud guard attached to the rear arm are known. The rear arm is swingably attached to the vehicle-body frame of the straddled vehicle for supporting the rear wheel. The mud guard attached to the rear arm swings up and down together with the rear wheel. Such a mud guard is sometimes referred to as movable rear fender or rear fender, for example.
Ducati Diavel Titanium Side as presented at EICMA 2014 provides a straddled vehicle comprising a vehicle-body frame with a rear arm swingably supported by a rear portion of the vehicle-body frame and a rear wheel rotatably supported by the rear arm. A sprocket is fixed to the rear wheel and rotatable concentrically with the rear wheel. A seat located above the vehicle-body frame and extending from a position located forward of a forwardmost point of the rear wheel to a position located rearward of a forwardmost point of the sprocket in vehicle side view. A front mud guard member is attached to the rear arm and covering the front and top of the rear wheel, and a rear mud guard member attached to the rear arm and covering the rear and top of the rear wheel. In vehicle side view, a rearmost point of a portion of the front mud guard member covering the rear wheel from above is located forward of a forwardmost point of the sprocket on the rear wheel, and a forwardmost point of a portion of the rear mud guard member covering the rear wheel from above is located rearward of a rearmost point of the rear arm. A plate assembly is attached to the rear arm.

JP 2015-123764 A describes a rear fender attached to the rear arm. This rear fender includes a fender body disposed above the rear wheel, a left side guard located to the left of the rear wheel, and a right side guard located to the right of the rear wheel. The fender body and left and right side guards are formed from a resin. The left and right side guards guard against mud splashed toward the vehicle from the left and right. This increases the fending performance. Forming the fender body and left and right side guards from a resin reduces the weight of the rear fender. This reduces the unsprung weight of the vehicle.

The rear fender disclosed in JP 2015-123764 A is constructed to cover the entire rear wheel as viewed from above the vehicle.

If the rear fender that entirely covers the top of the rear wheel is omitted, mud splashed by the rear wheel may reach the rider or passenger. To prevent this, it may be considered an arrangement with a guard for fending which is located above the spring and extends from the seat rearwardly and downwardly. With such an arrangement, it was found that a large guard protruding rearwardly from the seat would be necessary to provide sufficient fending functionality. That is, since the guard extending from the seat rearwardly is separated from the rear wheel, it would need to have a large mud-receiving surface area for receiving mud splashed by the rear wheel.

In view of this, it may be considered a mud guard below the spring including a front mud guard member and a rear mud guard member, and considered various shapes and positions of these members. After these considerations, they reached an arrangement that can efficiently guard against water and/or mud splashed by the rear wheel and moving toward the rider or passenger while reducing the size of the mud guard below the spring to minimize the unsprung weight by devising a suitable positional relationship between the rear arm and sprocket, which are parts below the spring, and the front and rear mud guard members.

It is the object of the present invention to provide a straddled vehicle including a mud guard that ensures fending functionality while reducing unsprung weight.

According to the present invention said object is solved by a straddled vehicle having the features of independent claim 1. Preferred embodiments are laid down in the dependent claims.

Accordingly, a straddled vehicle includes a vehicle-body frame, a rear arm swingably supported by a rear portion of the vehicle-body frame, a rear wheel rotatably supported by the rear arm, a sprocket fixed to the rear wheel and rotatable concentrically with the rear wheel, a seat located above the vehicle-body frame and extending from a position located forward of a forwardmost point of the rear wheel to a position located rearward of a forwardmost point of the sprocket in side view, a front mud guard member attached to the rear arm and covering the front and top of the rear wheel, and a rear mud guard member attached to the rear arm and covering the rear and top of the rear wheel. In side view, a rearmost point of a portion of the front mud guard member covering the rear wheel from above is located forward of a forwardmost point of the sprocket on the rear wheel, and a forwardmost point of a portion of the rear mud guard member covering the rear wheel from above is located rearward of a rearmost point of the rear arm and a plate assembly extends rearwardly from a lower surface of a rear of the seat, a license plate is attached to a rear end of the plate assembly, anda rearmost point of the rear mud guard member is located forward of a rearmost point of the license plate, and the rearmost point of the rear mud guard member is located forward of a rearmost point of the straddled vehicle. (first arrangement).

In the above-described first arrangement, the front mud guard member covering the rear wheel from its front and from above and the rear mud guard member covering the rear wheel from its rear and from above constitute a mud guard attached to the rear arm. This will reduce the unsprung weight compared with in implementations where a mud guard covering the entire top of the rear wheel as viewed from above the vehicle is attached to the rear arm. In this arrangement, it is preferable to minimize the sizes of the front and rear mud guard members in order to reduce the unsprung weight. However, if there is a large distance between the front and rear mud guard members as measured in the front-rear direction, water and/or mud splashed by the rear wheel may pass between the front and rear mud guard members to reach the rider or passenger. It is considered an arrangement where the seat is disposed in a region extending from a position located forward of the forwardmost point of the rear wheel to a position located rearward of the forwardmost point of the sprocket in side view, and the front and rear mud guard members are disposed in such a way that the rearmost point of the front mud guard member is located forward of the forwardmost point of the sprocket on the rear wheel and the forwardmost point of the rear mud guard member is located rearward of the rearmost point of the rear arm. Thus, while a suitable distance is provided between the front and rear mud guard members, water and/or mud splashed by the rear wheel can be guarded against by the front and rear mud guard members and seat working together. As a result, water and/or mud splashed by the rear wheel will be effectively prevented from reaching the rider or passenger. That is, the above-described first arrangement ensures that water and/or mud splashed by the rear wheel is prevented from reaching the rider or passenger (this functionality will be hereinafter referred to as fending), while providing a suitable distance between the front and rear mud guard members. That is, the area covered by the mud guard can be reduced and efficient fending can be achieved.

The portion of the front mud guard member that covers the rear wheel from above is the portion of the front mud guard member covering the rear wheel as viewed from above as determined along the top-bottom direction of the vehicle-body frame, The portion of the front mud guard member that covers the rear wheel from above overlaps the rear wheel as determined along the vehicle-width direction.

The portion of the rear mud guard member that covers the rear wheel from above is the portion of the rear mud guard member covering the rear wheel as viewed from above as determined along the top-bottom direction of the vehicle-body frame. The portion of the rear mud guard member that covers the rear wheel from above overlaps the rear wheel as determined along the vehicle-width direction.

Starting from the first arrangement, the front mud guard member may include a section having a larger width as measured in a vehicle-width direction than the rear wheel within a section of the front mud guard member overlapping the rear wheel as viewed from above (second arrangement). This will further increase the fending effect while providing a suitable distance between the front and rear mud guard members.

Starting from the first or second arrangement, the rear mud guard member may include a first section having a larger width as measured in a vehicle-width direction than the rear wheel within a section of the rear mud guard member overlapping the rear wheel as viewed in a radial direction of the rear wheel. In this implementation, a length of a segment connecting a front end and a rear end of the first section of the rear mud guard member as determined along a circumferential direction of the rear wheel may be larger than a width of the rear wheel as measured in the vehicle-width direction (third arrangement). That is, the dimension of the first section as measured in the circumferential direction may be larger than the width of the rear wheel as measured in the vehicle-width direction. This will further increase the fending effect while providing a suitable distance between the front and rear mud guard members.

Starting from any one of the first to third arrangements, in side view, a lowermost point of a portion of the rear mud guard member covering the rear of the rear wheel may be located higher than an uppermost point of the sprocket (fourth arrangement). This will further reduce the area covered by the mud guard, while ensuring fending functionality.
The portion of the rear mud guard member that covers the rear wheel from its rear is the portion of the mud guard covering the rear wheel as viewed from its rear as determined along the front-rear direction of the vehicle-body frame. The portion of the rear mud guard member that covers the rear wheel from its rear overlaps the rear wheel as determined along the vehicle-width direction.

In the first arrangement, in side view, a rearmost point of the rear mud guard member may be located forward of a rearmost point of the straddled vehicle. This is further reducing the area covered by the mud guard, while ensuring fending functionality.

Starting from the first arrangement, in side view, an uppermost point of the rear mud guard member may be located higher than an uppermost point of the front mud guard member (fifith arrangement). This will increase fending functionality.

Starting from any one of the first to fifth arrangements, the straddled vehicle may include a seat located above the vehicle-body frame. A width, as measured in a vehicle-width direction, of each of a front section and a rear section within a section of the rear mud guard member overlapping the rear wheel as viewed in a radial direction of the rear wheel may be smaller than a width of the rear wheel as measured in the vehicle-width direction. And a width, as measured in the vehicle-width direction, of a central section of the rear mud guard member located between the front and rear sections may be larger than the width of the rear wheel as measured in the vehicle-width direction. In this implementation, in side view, a plate assembly may be positioned on an imaginary line connecting the front section of the rear mud guard member having a smaller width as measured in the vehicle-width direction than the rear wheel to a rotational axis of the rear wheel. The plate assembly may extend from a rear of the seat. The plate assembly may have a width as measured in the vehicle-width direction larger than the width of the rear wheel as measured in the vehicle-width direction (sixth arrangement). Thus, the plate assembly may receive water and/or mud moving past the front section of the rear mud guard member with smaller widths toward the rider or passenger. This will further reduce the area covered by the mud guard while ensuring fending functionality by virtue of the plate assembly. The central section is the same as the first section.

Starting from the sixth arrangement, the plate assembly may be present at least at a position located forward of the imaginary line and between the imaginary line and the rear of the seat (seventh arrangement). Thus, the plate assembly may receive water and/or mud passing between the front and rear mud guard members toward the rider or passenger. This will further reduce the area covered by the mud guard while ensuring fending functionality.

Starting from any one of the first to seventh arrangements, a width, as measured in a vehicle-width direction, of each of a front section and a rear section within a section of the rear mud guard member overlapping the rear wheel as viewed in a radial direction of the rear wheel may be smaller than a width of the rear wheel as measured in the vehicle-width direction. And a width, as measured in the vehicle-width direction, of a central section of the rear mud guard member located between the front and rear sections may be larger than the width of the rear wheel as measured in the vehicle-width direction. In this implementation, in side view, a front end of the central section of the rear mud guard member having a larger width as measured in the vehicle-width direction than the rear wheel may be located rearward of a rearmost point of the sprocket eighth arrangement). This will further reduce the area covered by the mud guard, while ensuring fending functionality.

The sections of the rear mud guard member overlapping the rear wheel as viewed in a radial direction of the rear wheel is the section of the rear mud guard member overlapping the rear wheel as determined along the vehicle-width direction. The front end of the central section of the rear mud guard member having larger widths as measured in the vehicle-width direction than the rear wheel means the front end of the section of the rear mud guard member having larger widths as measured in the vehicle-width direction than the width of the rear wheel as measured in the vehicle-width direction as viewed from above as determined along the top-bottom direction of the vehicle-body frame.

Starting from any one of the first to sixth arrangements, in side view, a distance between the rearmost point of the portion of the front mud guard member covering the rear wheel from above and a vertical line passing through a rotational axis of the rear wheel may be larger than a distance between the forwardmost point of the portion of the rear mud guard member covering the rear wheel from above and the vertical line passing through the rotational axis of the rear wheel ninth arrangement). This will provide the fending effect while providing a more suitable distance between the front and rear mud guard members.

In the above description of the first to seventh arrangements, "front" and "forward" mean the forward direction as determined along the front-rear direction with respect to the vehicle-body frame. "Rear(ward)" means the rear direction as determined along the front-rear direction with respect to the vehicle-body frame. "Above" and "higher" mean the upward direction as determined along the top-bottom direction with respect to the vehicle-body frame. "Below" and "lower" mean the downward direction as determined along the top-bottom direction with respect to the vehicle-body frame. For example, the front mud guard member covering the rear of the rear wheel means that it covers the rear wheel from its front as determined along the front-rear direction with respect to the vehicle-body frame. In such cases, as viewed from the front as determined along the front-rear direction with respect the vehicle-body frame, at least a part of the front mud guard member overlaps at least a part of the rear wheel. The rear mud guard member covering the rear of the rear wheel means that it covers the rear wheel from its rear as determined along the front-rear direction with respect to the vehicle-body frame. In such cases, as viewed from the rear as determined along the front-rear direction with respect to the vehicle-body frame, at least a part of the rear mud guard member overlaps at least a part of the rear wheel.

"Forwardmost point" and "front end" mean the forwardmost point or line as determined along the front-rear direction with respect to the vehicle-body frame. "Rearmost point" and "rear end" mean the rearmost point or line as determined along the front-rear direction with respect to the vehicle-body frame. "Uppermost point" means the uppermost point as determined along the top-bottom direction with respect to the vehicle-body frame. "Lowermost point" means the lowermost point as determined along the top-bottom direction with respect to the vehicle-body frame. The vehicle-width direction is represented by the left-right direction with respect to the vehicle-body frame. Width as measured in the vehicle-width direction is the same as dimension as measured in the left-right direction of the vehicle-body frame.

The positions of the components in the first to seventh arrangements are ones found when the straddled vehicle is in an as-designed empty condition, i.e. wet weight condition. An as-designed empty condition is a so-called 1G' condition. The straddled vehicle in an as-designed empty condition includes fuel, tools and mirrors, for example. Further, the positions of the components in the first to seventh arrangements are ones found when the straddled vehicle is placed on a horizontal surface with the vehicle-body frame being upright. The vehicle-body frame being upright means that the top-bottom direction with respect to the vehicle-body frame coincides with the vertical direction.

### BRIEF DESCRIPTION OF THE DRAWINGS

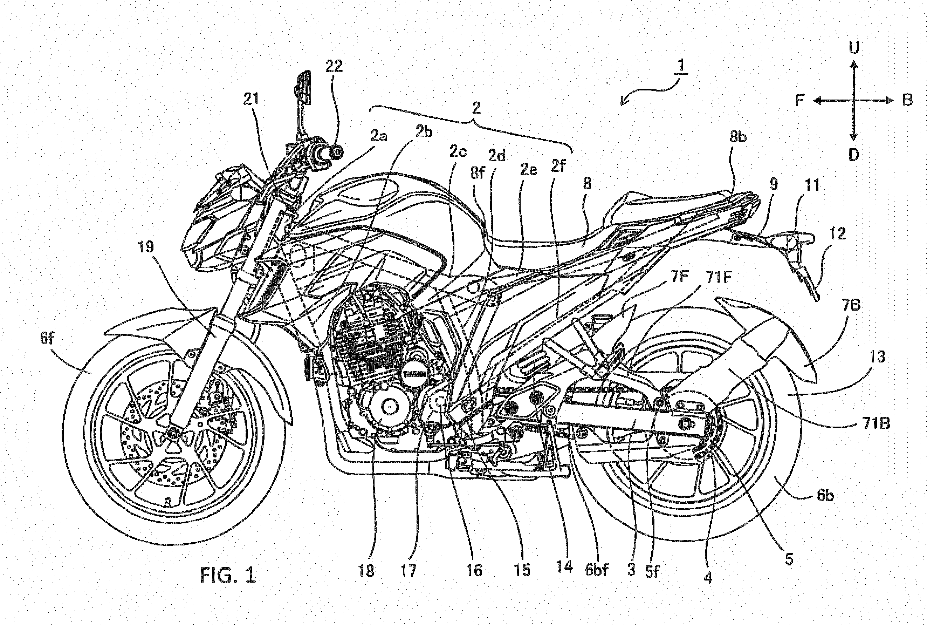

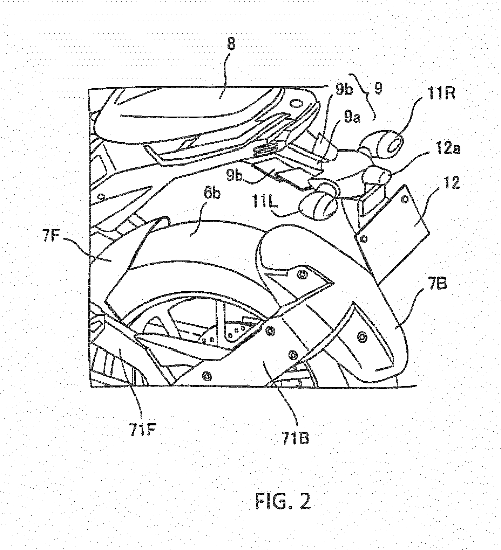

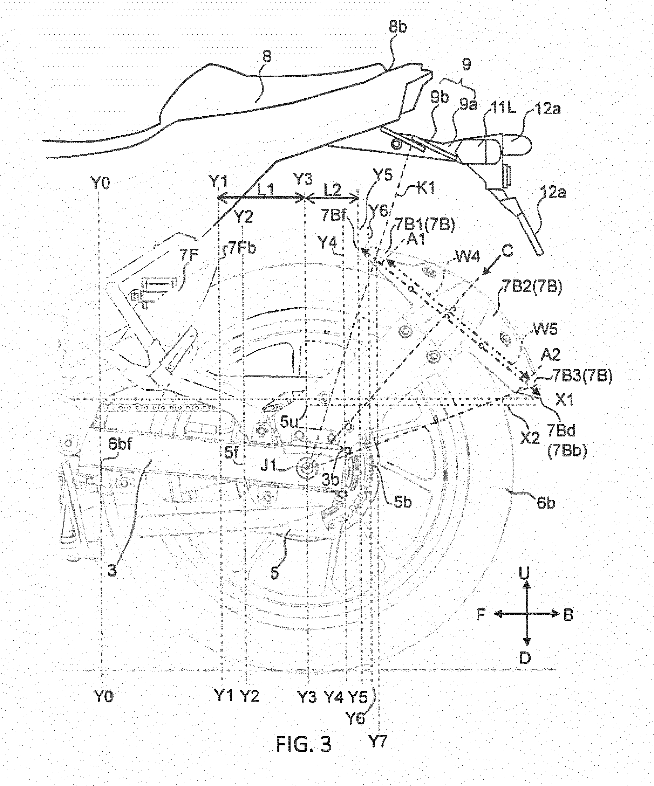

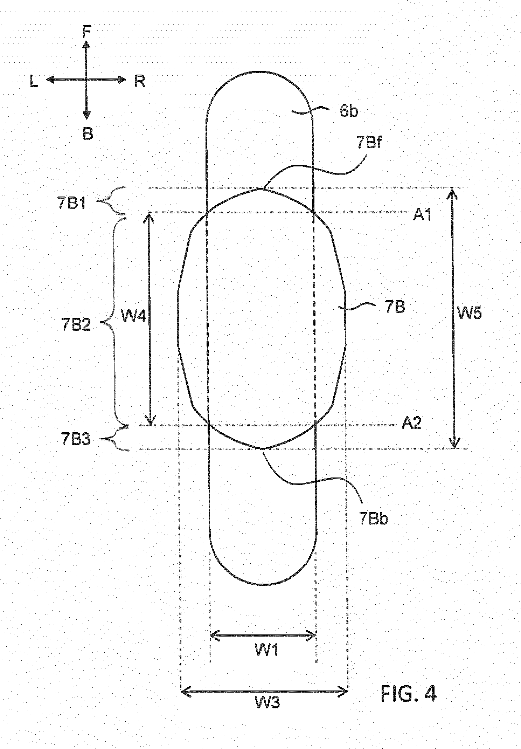

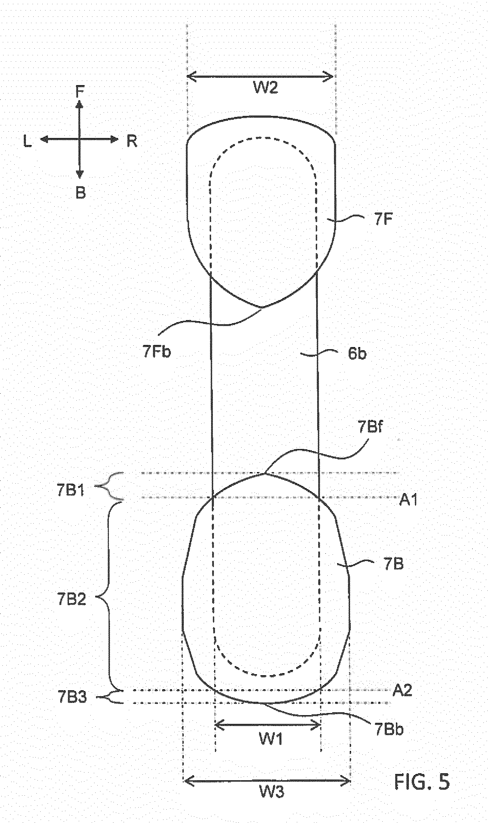

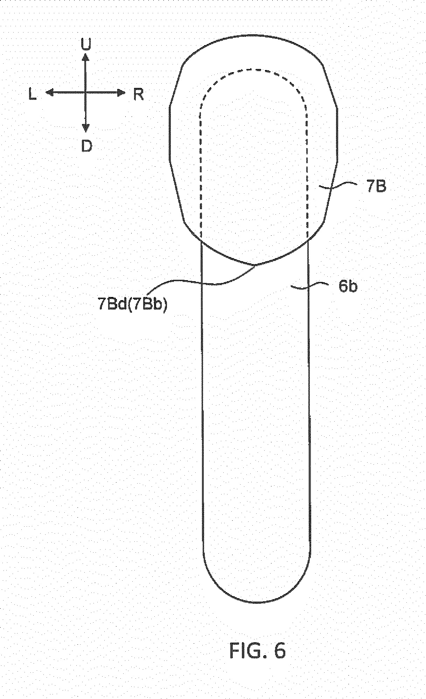

[FIG. 1] FIG. 1 is a left side view of an entire vehicle as viewed from its left.[FIG. 2] FIG. 2 is a perspective view of the rear mud guard member of the vehicle shown in FIG. 1 and nearby components as viewed from its top left rear.[FIG. 3] FIG. 3 is an enlarged view of a portion of the left side view shown in FIG. 1.[FIG. 4] FIG. 4 illustrates the positioning of the rear wheel and rear mud guard member as viewed along arrow C of FIG. 3.[FIG. 5] FIG. 5 is a plan view illustrating the positioning of the rear wheel, front mud guard member and rear mud guard member as viewed from above.[FIG. 6] FIG. 6 is a rear view illustrating the positioning of the rear wheel and rear mud guard member as viewed from their rear.

### DETAILED DESCRIPTION OF THE PREFERRED EMBODIMENTS

A preferred embodiment will be described below in detail with reference to the drawings.

In the drawings, arrow "F" indicates the forward direction with respect to the vehicle. Arrow "B" indicates the rearward direction with respect to the vehicle. Arrow "U" indicates the upward direction with respect to the vehicle. Arrow "D" indicates the downward direction with respect to the vehicle. Arrow "R" indicates the right direction with respect to the vehicle. Arrow "L" indicates the left direction with respect to the vehicle.

The vehicle-body frame may be inclined relative to the vertical direction toward the left or right with respect to the vehicle or forward or rearward with respect to the vehicle. In view of this, in addition to the directions with respect to the vehicle, directions with respect to the vehicle-body frame will be defined. In the accompanying drawings, the forward and rearward directions, the left and right directions and the upward and downward directions with respect to the vehicle-body frame coincide with the forward and rearward directions, the left and right directions and the upward and downward directions with respect to the vehicle. That is, the accompanying drawings show the vehicle being upright without being inclined toward the left or right.

In this specification, "front-rear direction of the vehicle-body frame", "left-right direction of the vehicle-body frame" and "top-bottom direction of the vehicle-body frame" mean the front-rear direction, left-right direction and top-bottom direction as perceived by a rider operating the vehicle with respect to the vehicle-body frame. The left-right direction of the vehicle-body frame is the same as the vehicle-width direction.

In the following description, the simple terms "front/forward", "rear(ward)", "left", "right", "upward/higher/above" and "downward/lower/below" mean the forward direction as determined along the front-rear direction of the vehicle-body frame, the rearward direction as determined along the front-rear direction of the vehicle-body frame, the left direction as determined along the left-right direction of the vehicle-body frame, the right direction as determined along the left-right direction of the vehicle-body frame, the upward direction as determined along the top-bottom direction of the vehicle-body frame, and the downward direction as determined along the top-bottom direction of the vehicle-body frame.

In this specification, "extend forwardly as determined along the front-rear direction of the vehicle-body frame" may also mean that something extends in a direction angled relative to the front-rear direction of the vehicle-body frame. "Extend rearwardly as determined along the front-rear direction of the vehicle-body frame" may also mean that something extends in a direction angled relative to the front-rear direction of the vehicle-body frame.

In this specification, "extend to the left as determined along the left-right direction of the vehicle-body frame" may also mean that something extends in a direction angled relative to the left-right direction of the vehicle-body frame. "Extend to the right as determined along the left-right direction of the vehicle-body frame" may also mean that something extends in a direction angled relative to the left-right direction of the vehicle-body frame.

In this specification, "extend upwardly as determined along the top-bottom direction of the vehicle-body frame" may also mean that something extends in a direction angled relative to the top-bottom direction of the vehicle-body frame. "Extend downwardly as determined along the top-bottom direction of the vehicle-body frame" may also mean that something extends in a direction angled relative to the top-bottom direction of the vehicle-body frame.

In this specification, "the vehicle-body frame being upright" means that the top-bottom direction of the vehicle-body frame coincides with the vertical direction. In this state, a direction with respect to the vehicle coincides with the corresponding direction with respect to the vehicle-body frame. When the vehicle-body frame is leaning toward the left or right relative to the vertical direction, the left-right direction of the vehicle does not coincide with the left-right direction of the vehicle-body frame, nor does the top-bottom direction of the vehicle coincide with the top-bottom direction of the vehicle-body frame. On the other hand, the front-rear direction of the vehicle coincides with the front-rear direction of the vehicle-body frame even when the vehicle-body frame is leaning toward the left or right relative to the vertical direction.

In this specification, "connection" may mean not only physical connection, but electrical connection and a state that allows for communication. Physical connection may mean that, for example, two members are directly connected to each other, or that two members are indirectly connected to each other with another member provided therebetween.

### (Vehicle Construction)

FIG. 1 is a left side view of a straddled vehicle according to the present embodiment. The straddled vehicle 1 shown in FIG. 1 (hereinafter simply referred to as vehicle 1) is a motorcycle. The vehicle 1 includes a vehicle-body frame 2, a power unit 18, a front wheel 6f, a rear wheel 6b, handlebars 22, a steering shaft 21, a front fork 19, a seat 8, a rear suspension 14, and a rear arm 3.

The vehicle-body frame 2 includes a head pipe 2a, a downtube 2b, a main frame portion 2c, a vertical frame portion 2d, a rear upper frame portion 2e, and a rear lower frame portion 2f. The main frame portion 2c extends in the front-rear direction. The front of the main frame portion 2c is connected to the head pipe 2a. The downtube 2b extends downwardly from the head pipe 2a. The rear upper frame portion 2e extends rearwardly from the rear of the main frame portion 2c. The vertical frame portion 2d extends downward from the rear of the main frame portion 2c. The rear lower frame portion 2f is located below the rear upper frame portion 2e. The front of the rear lower frame portion 2f is connected to the bottom of the vertical frame portion 2d, and the rear of the rear lower frame portion 2f is connected to the rear of the rear upper frame portion 2e.

The downtube 2b, vertical frame portion 2d, rear upper frame portion 2e, and rear lower frame portion 2f each include a pair of frame portions to the left and right. The power unit 18 is supported (suspended) by the downtube 2b, main frame portion 2c and vertical frame portion 2d. The power unit 18 is located lower than the main frame portion 2c and rearward of the downtube 2b and forward of the vertical frame portion 2d. The rear arm 3 is swingably supported by the bottom of the vertical frame portion 2d. The rear arm 3 is swingable about a pivot shaft 15 that is rotatably supported by the vertical frame portion 2d. The direction of the axis of the pivot shaft 15 for the rear arm 3 is the same as the left-right direction of the vehicle-body frame 2. The seat 8 is placed on the rear upper frame portion 2e. The seat 8 is supported by the rear upper frame portion 2e.

The rear wheel 6b is rotatably supported by the rear arm 3. A rear portion of the rear arm 3 rotatably supports the axle of the rear wheel 6b. The sprocket 5 is fixed to the axle of the rear wheel 6b. The sprocket 5 rotates concentrically with the rear wheel 6b. The sprocket 5 is a driven sprocket.

The power unit 18 includes a power source such as an engine, electric motor or battery, and devices such as a transmission. Rotation generated by the power source is transmitted to an output shaft 16 via the transmission. That is, the power unit 18 includes an output shaft 16 for outputting rotation generated by the power source. A driving sprocket 17 is fixed to the output shaft 16. A chain is wound around the driving sprocket 17 and sprocket 5 (i.e. driven sprocket). This construction allows driving power from the power unit 18 to be transmitted to the rear wheel 6b. The rear wheel 6b rotates as driving power from the power unit 18 is transmitted thereto.

The steering shaft 21 is rotatably inserted into the head pipe 2a. The handlebars 22 are attached to the top of the steering shaft 21. The front fork 19 including a pair of legs to the left and right is attached to the steering shaft 21 with a bracket (not shown) provided therebetween. The front wheel 6f is rotatably supported by the bottom end of the front fork 19. As the handlebars 22 are operated, the front wheel 6f rotates to the left or right.

A front mud guard member 7F is attached to the rear arm 3, toward the front thereof. The front mud guard member 7F covers the rear wheel 6b from its front and from above. A rear mud guard member 7B is attached to the rear of the rear arm 3. The rear mud guard member 7B covers the rear wheel 6b from its rear and from above.

The front mud guard member 7F is attached to the rear arm 3 with a front mud guard support 71F provided therebetween. The front mud guard support 71F is connected to two locations on the rear arm 3, toward the front and rear of the rear arm 3. Two legs of the front mud guard support 71F extend from the front and rear of the rear arm 3 upwardly so as to approach each other, and are united above the rear arm 3. The front mud guard member 7F is attached to the top end of the front mud guard support 71F.

The rear mud guard member 7B is attached to the rear arm 3 with a rear mud guard support 71B provided therebetween. The rear mud guard support 71B is attached to the rear of the rear arm 3. The rear mud guard support 71B extends from the rear of the rear arm 3 upwardly and rearwardly. The rear mud guard support 71B extends from the axle of the rear wheel 6b in a radial direction. The rear mud guard member 7B is attached to the top end of the rear mud guard support 71B.

The rear wheel 6b is located below the rear of the seat 8. A plate assembly 9 extends rearwardly from the lower surface of the rear of the seat 8. A pair of flashers 11, to the left and right, and a license plate 12 are attached to the rear end of the plate assembly 9. The plate assembly 9 has surfaces facing the rear wheel 6b.

The seat 8 is located forward of and higher than the rear wheel 6b. In side view, the seat 8 extends from a position located forward of the forwardmost point 6bf of the rear wheel 6b to a position located rearward of the forwardmost point 5f of the sprocket 5. That is, in side view, the forwardmost point 8f of the seat 8 is located forward of the forwardmost point 6bf of the rear wheel 6b, and the rearmost point 8b of the seat 8 is located rearward of the forwardmost point 5f of the sprocket 5. Thus, as viewed from above as determined along the top-bottom direction of the vehicle-body frame 2, the seat 8 overlaps at least portions of the rear wheel 6b that are located forward of the forwardmost point 5f of the sprocket 5. That is, the seat 8 covers, from above, at least portions of the rear wheel 6b that are located forward of the forwardmost point 5f of the sprocket 5.

FIG. 2 is a perspective view of the rear mud guard member 7B and nearby components as viewed from the top left rear of the vehicle. The rear mud guard member 7B is fixed by the rear mud guard support 71B to a position to cover rear and top portions of the rear wheel 6b. The rear mud guard member 7B is shaped to be consistent with the outer peripheral surface of the rear wheel 6b. That is, in the rear wheel 6b, the diameter (i.e. diameter of the rear wheel as measured about the axle) is the largest at the center as determined along the left-right direction of the vehicle-body frame 2, and becomes smaller as it goes away from the center toward the left and right. The rear mud guard member 7B is curved so as to approach the radially inward portions of the rear wheel 6b as it goes away from the center as determined along the left-right direction of the vehicle-body frame 2 toward the left and right. In side view, the rear mud guard member 7B is curved along the outer periphery of the rear wheel 6b. As such, the distance between the rear mud guard member 7B and rear wheel 6b as measured in a radial direction of the rear wheel 6b is substantially the same over the entire rear mud guard member 7B.

The front mud guard member 7F is fixed by the front mud guard support 71F to a position to cover front and top portions of the rear wheel 6b. The front mud guard member 7F is shaped to be consistent with the outer peripheral surface of the rear wheel 6b. That is, the front mud guard member 7F is curved so as to approach the radially inward portions of the rear wheel 6b as it goes away from the center as determined along the left-right direction of the vehicle-body frame 2 toward the left and right. In side view, the front mud guard member 7F is curved along the outer periphery of the rear wheel 6b. The distance between the rear mud guard member 7F and rear wheel 6b as measured in a radial direction of the rear wheel 6b is substantially the same over the entire front mud guard member 7F.

The plate assembly 9 extending rearward from the rear of the seat 8 includes a support 9a and plates 9b. The support 9a is attached to a housing (not shown) forming a lower portion of the seat 8. The support 9a obliquely extends from the seat 8 rearwardly and downwardly. The plates 9b are attached to the left and right of the support 9a. The plates 9b includes two left plates located to the left of the support 9a and two right please located to the right of the support 9a. The lower surface of one of the two left plates is parallel to the lower surface of the other left plate, and they are angled relative to the direction in which the support 9a extends. The two left plates partially overlap each other. The lower surface of one of the two right plates is parallel to the lower surface of the other right surface, and they are angled relative to the direction in which the support 9a extends. The two right plates partially overlap each other.

The plate assembly 9 is located above the rear wheel 6b. The width of the plate assembly 9 as measured in the vehicle-width direction is larger than the width of the rear wheel 6b as measured in the vehicle-width direction. That is, as measured in the left-right direction of the vehicle-body frame 2, the distance between the leftmost point and rightmost point of the plate assembly 9 is larger than the width of the rear wheel 6b as measured in the vehicle-width direction. Thus, the plate assembly 9 overlaps the rear wheel 6b as viewed from above.

The left and right flashers 11L and 11R are provided on the rear end of the support 9a. A license plate light 12a for illuminating the license plate is provided between the left and right flashers 11L and 11R. The license plate 12 is provided below the license plate light 12a. The plate assembly 9 is located between the license plate 12 and seat 8.

FIG. 3 is an enlarged view of a rear portion of the vehicle 1 in the left side view shown in FIG. 1. The positioning of the front and rear mud guard members 7F and 7B will be described with reference to FIG. 3. In side view, the rearmost point 7Fb of the portion of the front mud guard member 7F that covers the rear wheel 6b from above is located forward of the forwardmost point 5f of the sprocket 5 on the rear wheel 6b. The vertical straight line Y1 (imaginary line) passing through the rearmost point 7Fb of the front mud guard member 7F is located forward of the vertical straight line Y2 (imaginary line) passing through the forwardmost point 5f of the sprocket 5 as determined along the front-rear direction of the vehicle-body frame. That is, the front mud guard member 7F is located forward of the forwardmost point 5f of the sprocket 5 as determined along the front-rear direction of the vehicle-body frame.

In side view, the forwardmost point 7Bf of the portion of the rear mud guard member 7B that covers the rear wheel 6b from above is located rearward of the rearmost point 3b of the rear arm 3. The vertical straight line Y5 (imaginary line) passing through the forwardmost point 7Bf of the rear mud guard member 7B is located rearward of the vertical straight line Y4 (imaginary line) passing through the rearmost point 3b of the rear arm 3 as determined along the front-rear direction of the vehicle-body frame 2. That is, the rear mud guard member 7B is located rearward of the rearmost point 3b of the rear arm 3 as determined along the front-rear direction of the vehicle-body frame 2.

As discussed above, in side view, the seat 8 extends from a position located forward of the forwardmost point 6bf of the rear wheel 6b to a position located rearward of the forwardmost point 5f of the sprocket 5. That is, the seat 8 is present above the rear wheel 6f at least in the region between the vertical straight line Y0 (imaginary line) passing through the forwardmost point 6bf of the rear wheel 6b and the vertical straight line Y2 passing through the forwardmost point 5f of the sprocket 5.

Thus, the positions of the forwardmost point 8f and rearmost point 8b of the seat 8 and the rearmost point 7Fb of the front mud guard member 7F and the forwardmost point 7Bf of the rear mud guard member 7B are determined depending on the relationship between them, on the one hand, and the sprocket 5 and rear arm 3, on the other hand, which are components located downstream of (i.e. closer to the rear wheel than) the suspension 14 (i.e. components contributing to the unsprung weight). Based on the positional relationship between these components, the appropriate distance between the front and rear mud guard members 7F and 7B as measured in the front-rear direction can be determined. Further, the rear mud guard member 7F, rear mud guard member 7B and seat 8 may work together to receive water and/or mud splashed by the rear wheel 6b and flying in all directions and in a wide range. This will prevent water and/or mud splashed by the rear wheel 6b from reaching the rider or passenger without having large areas covered by the front and rear mud guard members 7F and 7B. This will ensure fending functionality while minimizing the unsprung weight by reducing the area covered by the mud guard.

FIG. 4 shows the rear wheel 6b and rear mud guard member 7B as viewed in the direction of arrow C of FIG. 3. Arrow C indicates the direction of a line extending in a radial direction of the wheel 6b passing through the rotational axis J1 of the rear wheel 6b and the central point of the rear mud guard member 7B. The central point of the rear mud guard member 7B is the midpoint (i.e. center) between the forwardmost point and rearwardmost point, as determined along the circumferential direction of the rear wheel 6b, of the section of the rear mud guard member 7B that overlaps the rear wheel 6b as viewed in a radial direction of the rear wheel 6b. FIG. 4 does not show the components other than the rear wheel 6b and rear mud guard member 7B.

The width W3 of the entire rear mud guard member 7B as measured in the vehicle-width direction is larger than the width W1 of the rear wheel 6b as measured in the vehicle-width direction. The widths of sections of the rear mud guard member 7B located toward the front and rear as measured in the vehicle width direction is smaller than the central section of the rear mud guard member 7B. The width of the section of the rear mud guard member 7B located toward the front as measured in the vehicle-width direction decreases as it goes forward. The width of the section of the rear mud guard member 7B located toward the rear as measured in the vehicle-width direction decrease as it goes rearward.

A portion, toward the front, of the section of the rear mud guard member 7B overlapping the rear wheel 6b as viewed in a radial direction of the rear wheel 6b, that has widths as measured in the vehicle-width direction (i.e. left-right direction of the vehicle-body frame 2) smaller than the width of the rear wheel 6b as measured in the vehicle-width direction, will be referred to as front section 7B1. A portion, toward the rear, of the section of the rear mud guard member 7B overlapping the rear wheel 6b as viewed in a radial direction of the rear wheel 6b, that has widths as measured in the vehicle-width direction smaller than the width of the rear wheel 6b as measured in the vehicle-width direction, will be referred to as rear section 7B3. The section of the rear mud guard member 7B between the front and rear sections 7B1 and 7B3, which has widths as measured in the vehicle-width direction larger than the width of the rear wheel 6b as measured in the vehicle-width direction, will be referred to as central section 7B2. The width of the front end A1 and rear end A2 of the central section 7B2 of the rear mud guard member 7B as measured in the vehicle-width direction is the same as the width of the rear wheel 6b as measured in the vehicle-width direction.

Thus, the rear mud guard member 7B has a central section 7B2 (one example of the first section) of the section overlapping the rear wheel 6b as viewed in a radial direction of the rear wheel 6b, that has widths as measured in the vehicle-width direction larger than the rear wheel 6b. Then, the length W4 of the segment connecting of the front and rear ends of the central section 7B2 of the rear mud guard member as determined along the circumferential direction of the rear wheel 6b is larger than the width W1 of the rear wheel 6b (W4>W1). Thus, as the section of the rear mud guard member 7B that has widths as measured in the vehicle-width direction larger than the rear wheel 6f, i.e. central section 7B2, covers the distance W4 along the circumferential direction of the rear wheel 6f, which is larger than the width W1 of the rear wheel 6f, the fending effect provided by the rear mud guard member 7B in combination with the front mud guard member 7F and seat 8 will be increased.

As shown in FIG. 3, the dimension W5 of the rear mud guard member 7B as measured in a direction perpendicular to a radial direction of the rear wheel 6b is the one-line distance between the forwardmost point 7Bf and rearwardmost point 7Bb of the rear mud guard member 7B as determined along the circumferential direction of the rear wheel 6b. That is, it is the distance as measured in the direction perpendicular to both (a) the radial line (i.e. line of arrow C) passing through the middle between the forwardmost point 7Bf and rearwardmost point 7Bb of the rear mud guard member 7B as determined along the circumferential direction of the rear wheel 6b and (b) the vehicle-width direction. The length W4 of the segment connecting of the front and rear ends of the central section 7B2 of the rear mud guard member as determined along the circumferential direction of the rear wheel 6b is the one-line distance measured in a direction perpendicular to a radial direction of the rear wheel 6b. In the present implementation, the forwardmost point 7Bf of the rear mud guard member 7B as determined along the circumferential direction of the rear wheel 6b is identical with the forwardmost point 7Bf of the rear mud guard member 7B as determined along the front-rear direction of the vehicle-body frame. The rearwardmost point 7Bb of the rear mud guard member 7B as determined along the circumferential direction of the rear wheel 6b is identical with the rearmost point 7Bb of the rear mud guard member 7B as determined along the front-rear direction of the vehicle-body frame.

The rearmost point 7Fb of the front mud guard member 7F and the forwardmost point 7Bf of the rear mud guard member 7B will be described below with reference to FIG. 5. FIG. 5 is a plan view of the rear wheel 6b, front mud guard member 7F and rear mud guard member 7B as viewed from above as determined along the top-bottom direction of the vehicle-body frame. In plan view, the rearwardmost point of the section of the front mud guard member 7F overlapping the rear wheel 6b defines the rearwardmost point 7Fb of the portion of the front mud guard member 7F covering the top of the wheel. In plan view, the forwardmost point of the section of the rear mud guard member 7B overlapping the rear wheel 6b defines the forwardmost point 7Bf of the portion of the rear mud guard member 7B covering the top of the wheel.

The width W2 of the entire front mud guard member 7F as measured in the vehicle-width direction (i.e. left-right direction of the vehicle-body frame 2) is larger than the width W1 of the rear wheel 6b as measured in the vehicle-width direction. A rear section of the front mud guard member 7F has widths as measured in the vehicle-width direction smaller than the central section of the front mud guard member 7F. The width of the rear section of the front mud guard member 7F as measured in the vehicle-width direction decreases as it goes rearward. The front mud guard member 7F has sections overlapping the rear wheel 6b as viewed from above that have widths as measured in the vehicle-width direction larger than the rear wheel 6b. This will increase the fending effect of the front mud guard member 7F in combination with the rear mud guard member 7B and seat 8.

FIG. 6 is a rear view of the rear wheel 6b and rear mud guard member 7B as viewed from their rear as determined along the front-rear direction of the vehicle-body frame. The width of a rear section of the rear mud guard member 7B as measured in the vehicle-width direction decreases as it goes downward, as viewed from the rear of the section. As viewed from the rear of the rear mud guard member, the lowermost point of the section of the rear mud guard member 7B overlapping the rear wheel 6b defines the lowermost point 7Bd of the portion of the rear mud guard member 7B covering the rear of the rear wheel 6b.

Referring to FIG. 3, the rearmost point 7Fb of the front mud guard member 7F is the uppermost point of the front mud guard member 7F, i.e. the uppermost point thereof as determined along the top-bottom direction of the vehicle-body frame 2. The forwardmost point 7Bf of the rear mud guard member 7B is the uppermost point of the rear mud guard member 7B, i.e. the upper point thereof as determined along the top-bottom direction of the vehicle-body frame 2. As determined along the top-bottom direction of the vehicle-body frame, the uppermost point (or forwardmost point 7Bf) of the rear mud guard member 7B is located higher than the uppermost point (or rearmost point 7Fb) of the front mud guard member 7F. This will improve the fending effect of the front and rear mud guard members 7F and 7B.

The lowermost point 7Bd of the portion of the rear mud guard member 7B covering the rear wheel 6b from its rear is the rearmost point of the rear mud guard member 7B, i.e. rearmost point thereof as determined along the front-rear direction of the vehicle-body frame 2. The license plate 12 has a display surface inclined relative to the top-bottom direction of the vehicle-body frame 2. Thus, the lowermost point of the license plate 12 is located rearward of the uppermost point thereof as determined along the front-rear direction of the vehicle-body frame 2. The lowermost point of the license plate 12 is the rearmost point of the vehicle 1, i.e. rearwardmost point of the vehicle-body frame 2 as determined along the front-rear direction. In side view, the rearmost point (or lowermost point 7Bd) of the rear mud guard member 7B is located forward of the rearmost point of the vehicle 1, i.e. lowermost point of the license plate 12. This will ensure the fending functionality of the rear mud guard member 7B while reducing the area of the rear wheel 6b covered by the rear mud guard 7B.

In side view, the lowermost point 7Bd of the portion of the rear mud guard member 7B covering the rear wheel 6b from its rear is located higher than the uppermost point 5u of the sprocket 5. That is, the portion of the rear mud guard member 7B covering the rear wheel 6b from its rear is located higher than the uppermost point 5u of the sprocket 5. This will further reduce the area covered by the mud guard while ensuring fending functionality.

In side view, the plate assembly 9 is located on the imaginary line K1 connecting a point within the front section 7B1 of the rear mud guard member 7B with the rotational axis J1 of the rear wheel. That is, any imaginary line K1 passing through the rotational axis J1 of the rear wheel and the front section 7B1 of the rear mud guard member 7B passes through the plate assembly 9. The entire front section 7B1 of the rear mud guard member 7B overlaps the plate assembly 9 as viewed in radial directions of the rear wheel 6b. The front section 7B1 of the rear mud guard member 7B is a section of the rear mud guard member 7B overlapping the rear wheel 6b as viewed in a radial direction of the rear wheel 6b and having widths as measured in the vehicle-width direction smaller than the rear wheel 6b. The plate assembly 9, above the rear wheel 6b, extends from the rear of the seat 8. The plate assembly 9 is located higher than the rear wheel 6b. The width of the plate assembly 9 as measured in the vehicle-width direction is larger than the width of the rear wheel as measured in the vehicle-width direction.

According to the above-described arrangement, the plate assembly 9 is located radially outward of the portions of the rear wheel 6b that are not covered by the rear mud guard member 7B any more because of the reduction of the width of the front section 7B1 of the rear mud guard member 7B. Thus, the plate assembly 9 can guard against water and/or mud splashed by the rear wheel 6b and moving past the front section of the rear mud guard member 7B toward the rider or passenger. In such implementations, only a small area is covered by each of the rear mud guard member 7B and plate assembly 9. This will achieve efficient fending.

In the implementation shown in FIG. 3, the plate assembly 9 is also present at positions located forward of the imaginary line K1, between the imaginary line K1 and the rear of the seat 8. As such, a line extending from the axle of the rear wheel 6b and passing between the rear and front mud guard members 7B and 7F in a radial direction passes either the plate assembly 9 or the rear of the seat 8. That is, the entire top of the rear wheel 6b is covered by a combination of the front mud guard member 7F, the rear of the seat 8 or plate assembly 9 and the rear mud guard member 7B such that the wheel and covering are arranged in a radial direction. Thus, water and/or mud splashed by the rear wheel 6b and passing between the front and rear mud guard members 7F and 7B and moving toward the rider or passenger can be guarded against by either the plate assembly 9 or the rear of the seat 8. In such implementations, only a small area is covered by each of the front mud guard member 7F, the rear mud guard member 7B, the rear of the seat 8 and plate assembly 9. This will achieve efficient fending.

In side view, the front end A1 of the central section 7B2 of the rear mud guard member 7B is located rearward of the rearmost point 5b of the sprocket 5. The central section 7B2 of the rear mud guard member 7B is the section having widths as measured in the vehicle-width direction of the rear mud guard member 7B larger than the width of the rear wheel 6b as measured in the vehicle-width direction. The vertical line Y7 passing through the front end A1 of the central section 7B2 of the rear mud guard member 7B is located rearward of the vertical line Y6 passing through the rearmost point 5b of the sprocket 5. Thus, the front section 7B1 of the rear mud guard member 7B is positioned to overlap the rearmost point 5b of the sprocket 5 as viewed from above. This will further reduce the area covered by the mud guard while ensuring fending functionality.

In side view, the distance L1 between the rearmost point 7Fb of the portion of the front mud guard member 7F covering the rear wheel 6b from above and the vertical line Y3 passing through the rotational axis J1 of the rear wheel 6b is larger than the distance L2 between the forwardmost point 7Bf of the portion of the rear mud guard member 7B covering the rear wheel 6b from above and the vertical line Y3 passing through the rotational axis J1 of the rear wheel 6b. That is, the distance L1 between the vertical imaginary plane containing the rotational axis J1 of the rear wheel 6b and perpendicular to the horizontal plane and the rearmost point 7Fb of the front mud guard member 7F is larger than the distance L2 between the vertical imaginary plane and the forwardmost point 7Bf of the rear mud guard member 7B. This will enable providing a suitable distance between the portion of the rear wheel 6b covered with the front mud guard member 7F and the portion of the rear wheel 6b covered with the rear mud guard member 7B. This will ensure fending functionality while reducing the area covered by the mud guard.

The above-illustrated embodiment specifies the positions of the rearmost point of the front mud guard member and the forwardmost point of the rear mud guard member relative to the under-spring components, as well as the positional relationship between the uppermost point of the front mud guard member and the uppermost point of the rear mud guard member, the positional relationship between the rearmost point of the rear mud guard member and the rearmost point of the vehicle, the position of the lowermost point of the rear mud guard member relative to the under-spring components, the relationship between the front section of the rear mud guard member and the plate assembly, the position of the front end of the central section of the rear mud guard member relative to the under-spring components, and the positions of the rearmost point of the front mud guard and the forwardmost point of the rear mud guard member relative to the rotational axis of the rear wheel. Not only implementations that employ all of these positional relationships, but implementations employing at least one of these positional relationships will provide the effect of the present teaching.

In the above-illustrated embodiment, the rear mud guard member and the rear mud guard support are separate parts. On the other hand, the rear mud guard member and the rear mud guard support provided on the rear arm for supporting the rear mud guard member may be integrally formed. Further, the front mud guard support and rear mud guard support may be integrally formed.

In the above-illustrated implementations, the rear mud guard support is attached to the rear of each of the rear arm sections located to the left and right of the rear wheel. Alternatively, the rear mud guard support may be attached to one of the left and right rear arm sections. That is, the rear mud guard member may be supported by a portion of the rear arm located to the left or right of the rear wheel.

Moreover, the straddled vehicle to which the present teaching can be applied is not limited to the above-illustrated implementations. For example, the vehicle-body frame may have a pair of main frame portions located to the left and right and the main frame portions may be formed integrally with the vertical frame portions.

The above-illustrated embodiment is an example where the present teaching is applied to a motorcycle; however, vehicles to which the present teaching can be applied are not limited to motorcycles. The present teaching may be applied to straddled vehicles other than motorcycles (e.g. tricycles). Straddled vehicle as used herein means any vehicle which a rider can ride where the rider sits astride a saddle.

## Claims

1. A straddled vehicle comprising:
a vehicle-body frame (2);
a rear arm (3) swingably supported by a rear portion of the vehicle-body frame (2);
a rear wheel (6b) rotatably supported by the rear arm (3);
a sprocket (5) fixed to the rear wheel (6b) and rotatable concentrically with the rear wheel (6b);
a seat (8) located above the vehicle-body frame (2) and extending from a position located forward of a forwardmost point (6bf) of the rear wheel (6b) to a position located rearward of a forwardmost point (5f) of the sprocket (5) in vehicle side view;
a front mud guard member (7F) attached to the rear arm (3) and covering the front and top of the rear wheel (6b); and
a rear mud guard member (7B) attached to the rear arm (3) and covering the rear and top of the rear wheel (6b),
wherein, in vehicle side view, a rearmost point (7Fb) of a portion of the front mud guard member (7F) covering the rear wheel (6b) from above is located forward of a forwardmost point (5f) of the sprocket (5) on the rear wheel (6b), and a forwardmost point (7Bf) of a portion of the rear mud guard member (7B) covering the rear wheel (6b) from above is located rearward of a rearmost point of the rear arm (3), and
a plate assembly (9) extends rearwardly from a lower surface of a rear of the seat (8), a license plate (12) is attached to a rear end of the plate assembly (9), and
a rearmost point (7Bd) of the rear mud guard member (7B) is located forward of a rearmost point of the license plate (12), and the rearmost point (7Bb) of the rear mud guard member (7B) is located forward of a rearmost point of the straddled vehicle.

2. A straddled vehicle according to claim 1, wherein the front mud guard member (7F) includes a section having a larger width (W2) as measured in a vehicle-width direction than the rear wheel (6b) within a section overlapping the rear wheel (6b) as viewed from above.

3. A straddled vehicle according to claim 1 or 2, wherein the rear mud guard member (7B) includes a first section (7B2) having a larger width as measured in a vehicle-width direction than the rear wheel (6b) within a section overlapping the rear wheel (6b) as viewed in a radial direction of the rear wheel (6b), and
a length (W4) of a segment connecting a front end and a rear end of the first section (7B2) of the rear mud guard member (7B) as determined along a circumferential direction of the rear wheel (6b) is larger than a width (W1) of the rear wheel (6b) as measured in the vehicle-width direction.

4. A straddled vehicle according to any one of claims 1 to 3, wherein, in vehicle side view, a lowermost point (7Bd) of a portion of the rear mud guard member (7B) covering the rear of the rear wheel (6b) is located higher than an uppermost point (5u) of the sprocket (5).

5. A straddled vehicle according to any one of claims 1 to 4, wherein, in vehicle side view, an uppermost point of the rear mud guard member (7B) is located higher than an uppermost point of the front mud guard member (7F).

6. A straddled vehicle according to any one of claims 1 to 5, wherein a width, as measured in a vehicle-width direction, of each of a front section (7B1) and a rear section (7B3) within a section of the rear mud guard member (7B) overlapping the rear wheel (6b) as viewed in a radial direction of the rear wheel (6b) is smaller than a width (W1) of the rear wheel (6b) as measured in the vehicle-width direction, and
a width (W3), as measured in the vehicle-width direction, of a central section (7B2) of the rear mud guard member (7B) located between the front and rear sections (7B1, 7B3) is larger than the width (W1) of the rear wheel (6b) as measured in the vehicle-width direction.

7. A straddled vehicle according to claim 6, wherein, in vehicle side view, the plate assembly (9) has a width as measured in the vehicle-width direction larger than the width (W1) of the rear wheel (6b) as measured in the vehicle-width direction is positioned on an imaginary line connecting the front section (7B1) of the rear mud guard member (7B) having a smaller width as measured in the vehicle-width direction than the rear wheel (6b) to a rotational axis (J1) of the rear wheel (6b).

8. A straddled vehicle according to claim 7, wherein the plate assembly (9) is present at least at a position located forward of the imaginary line and between the imaginary line and the rear of the seat (8).

9. A straddled vehicle according to any one of claims 6 to 8, wherein, in vehicle side view, a front end of the central section (7B2) of the rear mud guard member (7B) having a larger width as measured in the vehicle-width direction than the rear wheel (6b) is located rearward of a rearmost point of the sprocket (5).

10. A straddled vehicle according to any one of claims 1 to 9, wherein, in vehicle side view, a distance (L1) between the rearmost point (7Fb) of the portion of the front mud guard member (7F) covering the rear wheel (6b) from above and a vertical line (Y3) passing through a rotational axis (J1) of the rear wheel (6b) is larger than a distance (L2) between the forwardmost point (7Bf) of the portion of the rear mud guard member (7B) covering the rear wheel (6b) from above and the vertical line (Y3) passing through the rotational axis (J1) of the rear wheel (6b).

## Patentansprüche

1. Ein Spreiz-Sitz-Fahrzeug, das umfasst:
einen Fahrzeug-Körper-Rahmen (2);
einen hinteren Arm (3), der schwenkbar durch einen hinteren Abschnitt des Fahrzeug-Körper-Rahmens (2) gelagert ist;
ein Hinter-Rad (6b), das drehbar durch den hinteren Arm (3) gelagert ist;
ein Ketten-Rad (5), das an dem Hinter-Rad (6b) fixiert ist und konzentrisch mit dem Hinter-Rad (6b) drehbar ist;
einen Sitz (8), der oberhalb des Fahrzeug-Körper-Rahmens (2) angeordnet ist und sich von einer Position, angeordnet vor einem am weitesten vorne liegenden Punkt (6bf) von dem Hinter-Rad (6b), zu einer Position, angeordnet hinter einem am weitesten vorne liegenden Punkt (5f) des Ketten-Rads (5), in einer Seiten-Ansicht, erstreckt;
ein vorderes Schmutz-Schutz-Element (7F), das an dem hinteren Arm (3) angebracht ist und das Vordere und das Obere von dem Hinter-Rad (6b) abdeckt; und
ein hinteres Schmutz-Schutz-Element (7B), das an dem hinteren Arm (3) angebracht ist und das Hintere und das Obere von dem Hinter-Rad (6b) abdeckt, wobei, in Fahrzeug-Seiten-Ansicht, ein am weitesten hinten liegender Punkt (7Fb) von einem Abschnitt von dem vorderen Schmutz-Schutz-Element (7F), welches das Hinter-Rad (6b) von oben abdeckt, vor einem am weitesten vorne liegenden Punkt (5f) des Ketten-Rads (5) an dem Hinter-Rad (6b) angeordnet ist, und ein am weitesten vorne liegender Punkt (7Bf) von einem Abschnitt von dem hinteren Schmutz-Schutz-Element (7B), welches das Hinter-Rad (6b) von oben abdeckt, hinter einem am weitesten hinten liegenden Punkt von dem hinteren Arm (3) angeordnet ist, und
eine Platten-Anordnung (9) sich nach hinten von einer unteren Fläche von einem Rückteil des Sitzes (8) erstreckt, und eine Nummernschild-Platte (12) an einem hinteren Ende der Platten-Anordnung (9) angebracht ist, und
ein am weitesten hinten liegender Punkt (7Bd) von dem hinteren Schmutz-Schutz-Element (7B) vor einem am weitesten hinten liegenden Punkt von der Nummernschild-Platte (12) angeordnet ist, und der am weitesten hinten liegende Punkt (7Bb) von dem hinteren Schmutz-Schutz-Element (7B) vor einem am weitesten hinten liegenden Punkt von dem Spreiz-Sitz-Fahrzeug angeordnet ist.

2. Ein Spreiz-Sitz-Fahrzeug gemäß Anspruch 1, wobei das vordere Schmutz-Schutz-Element (7F) einen Abschnitt beinhaltet, der eine größere Breite (W2) hat, wenn in einer Fahrzeug-Breiten-Richtung gemessen, als das Hinter-Rad (6b) in einem Abschnitt, der das Hinter-Rad (6b) überlappt, wenn von oben betrachtet.

3. Ein Spreiz-Sitz-Fahrzeug gemäß Anspruch 1 oder 2, wobei das hintere Schmutz-Schutz-Element (7B) einen ersten Abschnitt (7B2) beinhaltet, der eine größere Breite hat, wenn in der Fahrzeug-Breiten-Richtung gemessen, als das Hinter-Rad (6b) in einem Abschnitt, der das Hinter-Rad (6b) überlappt, wenn in einer Radial-Richtung von dem Hinter-Rad (6b) betrachtet, und
eine Länge (W4) von einem Segment, das ein vorderes Ende und ein hinteres Ende von dem ersten Abschnitt (7B2) von dem hinteren Schmutz-Schutz-Element (7B) verbindet, wenn entlang einer Umfangsrichtung des Hinter-Rads (6b) bestimmt, ist größer als eine Breite (W1) von dem Hinter-Rad (6b), wenn in der Fahrzeug-Breiten-Richtung gemessen.

4. Ein Spreiz-Sitz-Fahrzeug gemäß zu irgendeinem der Ansprüche 1 bis 3, wobei, in Fahrzeug-Seiten-Ansicht, ein am weitesten unten liegender Punkt (7Bd) eines Abschnitts von dem hinteren Schmutz-Schutz-Element (7B), welches das hintere Teil des Hinter-Rads (6b) abdeckt, höher angeordnet ist als ein am weitesten oben liegender Punkt (5u) von dem Ketten-Rad (5).

5. Ein Spreiz-Sitz-Fahrzeug gemäß zu irgendeinem der Ansprüche 1 bis 4, wobei, in Fahrzeug-Seiten-Ansicht, ein am weitesten oben liegender Punkt von dem hinteren Schmutz-Schutz-Element (7B) höher angeordnet ist als ein am weitesten oben liegender Punkt von dem vorderen Schmutz-Schutz-Element (7F).

6. Ein Spreiz-Sitz-Fahrzeug gemäß zu irgendeinem der Ansprüche 1 bis 5, wobei eine Breite, wenn in der Fahrzeug-Breiten-Richtung gemessen, von jedem von jedem von einem Vorder-Abschnitt (7B1) und einem Rück-Abschnitt (7B3) in einem Abschnitt von dem hinteren Schmutz-Schutz-Element (7B), das das Hinter-Rad (6b) überlappt, wenn in einer Radial-Richtung von dem Hinter-Rad (6b) betrachtet, kleiner als eine Breite (W1) von dem Hinter-Rad (6b) ist, wenn in der Fahrzeug-Breiten-Richtung gemessen, und
eine Breite (W3), wenn in der Fahrzeug-Breiten-Richtung gemessen, von einem Zentral-Abschnitt (7B2) von dem hinteren Schmutz-Schutz-Element (7B), angeordnet zwischen den Vorder- und Hinter-Abschnitten (7B1, 7B3) größer ist als die Breite (W1) von dem Hinter-Rad (6b), wenn in der Fahrzeug-Breiten-Richtung gemessen.

7. Ein Spreiz-Sitz-Fahrzeug gemäß Anspruch 6, wobei, in Fahrzeug-Seiten-Ansicht, die Platten-Anordnung (9), die eine Breite hat, wenn in der Fahrzeug-Breiten-Richtung, die größer ist als die Breite (W1) von dem Hinter-Rad (6b), wenn in der Fahrzeug-Breiten-Richtung gemessen, ist auf einer imaginären Linie positioniert, die den Vorder-Abschnitt (7B1) von dem hinteren Schmutz-Schutz-Element (7B), das eine kleinere Breite hat, wenn in der Fahrzeug-Breiten-Richtung gemessen, als das Hinter-Rad (6b), mit einer Dreh-Achse (J1) von dem Hinter-Rad (6b) verbindet.

8. Ein Spreiz-Sitz-Fahrzeug gemäß Anspruch 7, wobei die Platten-Anordnung (9) an zumindest einer Position, die vor der imaginären Linie und zwischen der imaginären Linie und dem Hinter-Rad (8) angeordnet ist, vorliegt.

9. Ein Spreiz-Sitz-Fahrzeug gemäß zu irgendeinem der Ansprüche 6 bis 8, wobei, in Fahrzeug-Seiten-Ansicht, ein vorderes Ende des Zentral-Abschnitts (7B2) des hinteren Schmutz-Schutz-Elements (7B), der eine größere Breite hat, wenn in der Fahrzeug-Breiten-Richtung gemessen, als das Hinter-Rad (6b), ist hinter einem hintersten Punkt von dem Ketten-Rad (5) angeordnet.

10. Ein Spreiz-Sitz-Fahrzeug gemäß zu irgendeinem der Ansprüche 1 bis 9, wobei, in Fahrzeug-Seiten-Ansicht, ein Abstand (L1) zwischen dem am weitesten hinten liegenden Punkt (7Fb) von dem Abschnitt von dem vorderen Schmutz-Schutz-Element (7F), der das Hinter-Rad (6b) von oben abdeckt, und einer Vertikal-Linie (Y3), die durch eine Dreh-Achse (J1) des Hinter-Rads (6b) hindurchtritt, größer ist als ein Abstand (L2) zwischen dem am weitesten vorne liegenden Punkt (7Bf) von dem Abschnitt von dem hinteren Schmutz-Schutz-Element (7B), welches das Hinter-Rad (6b) von oben abdeckt, und der Vertikal-Linie (Y3), die durch die Dreh-Achse (J1) von dem Hinter-Rad (6b) hindurchtritt.

## Revendications

1. Véhicule de type à enfourcher comportant :
un châssis de véhicule (2) ;
un bras arrière (3) soutenu de manière pivotante par une partie arrière du châssis de véhicule (2) ;
une roue arrière (6b) soutenue de manière rotative par le bras arrière (3) ;
un pignon (5) fixé à la roue arrière (6b) et pouvant tourner de manière concentrique avec la roue arrière (6b) ;
un siège (8) situé au-dessus du châssis de véhicule (2) et s'étendant depuis une position située en avant d'un point le plus avancé (6bf) de la roue arrière (6b) à une position située en arrière d'un point le plus avancé (5f) du pignon (5) dans une vue latérale du véhicule ;
un élément de garde-boue avant (7F) attaché au bras arrière (3) et couvrant l'avant et le dessus de la roue arrière (6b) ; et
un élément de garde-boue arrière (7B) attaché au bras arrière (3) et couvrant l'arrière et le dessus de la roue arrière (6b),
où, dans une vue latérale du véhicule, un point le plus arrière (7Fb) d'une partie de l'élément de garde-boue arrière (7F) couvrant la roue arrière (6b) par le dessus est situé en avant d'un point le plus avant (5f) du pignon (5) sur la roue arrière (6b), et un point le plus avant (7Bf) d'une partie de l'élément de garde-boue arrière (7B) couvrant la roue arrière (6b) par le dessus est situé en arrière d'un point le plus arrière du bras arrière (3), et
un assemblage de plaque (9) s'étend vers l'arrière depuis une surface inférieure d'un arrière du siège (8), une plaque d'immatriculation (12) est attachée à une extrémité arrière de l'assemblage de plaque (9), et
un point le plus arrière (7Bd) de l'élément de garde-boue arrière (7B) est situé en avant d'un point le plus arrière de la plaque d'immatriculation (12), et le point le plus arrière (7Bd) de l'élément de garde-boue arrière (7B) est situé en avant d'un point le plus arrière du véhicule de type à enfourcher.

2. Véhicule de type à enfourcher selon la revendication 1, où dans une section superposée à la roue arrière (6b) vue d'en haut, l'élément de garde-boue avant (7F) comprend une section ayant une plus grande largeur (W2) mesurée dans la direction de la largeur du véhicule que la roue arrière (6b).

3. Véhicule de type à enfourcher selon la revendication 1 ou 2, où dans une section superposée à la roue arrière (6b) vue dans une direction radiale de la roue arrière (6b), l'élément de garde-boue arrière (7B) comprend une première section (7B2) ayant une plus grande largeur mesurée dans la direction de la largeur du véhicule que la roue arrière (6b), et
une longueur (W4) d'un segment reliant une extrémité avant et une extrémité arrière de la première section (7B2) de l'élément de garde-boue arrière (7B), déterminée dans une direction circonférentielle de la roue arrière (6b), est plus grande qu'une largeur (W1) de la roue arrière (6b), mesurée dans la direction de la largeur du véhicule.

4. Véhicule de type à enfourcher selon l'une quelconque des revendications 1 à 3, où, dans une vue latérale du véhicule, un point le plus bas (7Bd) d'une partie de l'élément de garde-boue arrière (7B) couvrant l'arrière de la roue arrière (6b) est situé plus haut qu'un point le plus haut (5u) du pignon (5).

5. Véhicule de type à enfourcher selon l'une quelconque des revendications 1 à 4, où, dans une vue latérale du véhicule, un point le plus haut de l'élément de garde-boue arrière (7B) est situé plus haut qu'un point le plus haut de l'élément de garde-boue avant (7F).

6. Véhicule de type à enfourcher selon l'une quelconque des revendications 1 à 5, où une largeur, mesurée dans la direction de la largeur du véhicule, d'une section avant (7B1) et d'une section arrière (7B3) à l'intérieur d'une section de l'élément de garde-boue arrière (7B) superposée à la roue arrière (6b), dans une vue dans la direction radiale de la roue arrière (6b), est plus petite qu'une largeur (W1) de la roue arrière (6b), mesurée dans la direction de la largeur du véhicule, et
une largeur (W3), mesurée dans la direction de la largeur du véhicule, d'une section centrale (7B2) de l'élément de garde-boue arrière (7B) située entre les sections avant et arrière (7B1, 7B3) est plus grande que la largeur (W1) de la roue arrière (6b), mesurée dans la direction de la largeur du véhicule.

7. Véhicule de type à enfourcher selon la revendication 6, où, dans une vue latérale du véhicule, l'assemblage de plaque (9) présente une largeur, mesurée dans la direction de la largeur du véhicule, plus grande que la largeur (W1) de la roue arrière (6b), mesurée dans la direction de la largeur du véhicule, et est positionnée sur une ligne imaginaire reliant la section avant (7B1) de l'élément de garde-boue arrière (7B), ayant une largeur, mesurée dans la direction de la largeur du véhicule, plus petite que la roue arrière (6b), et un axe de rotation (J1) de la roue arrière (6b).

8. Véhicule de type à enfourcher selon la revendication 7, où l'assemblage de plaque (9) est présent au moins dans une position située en avant de la ligne imaginaire et entre la ligne imaginaire et l'arrière du siège (8).

9. Véhicule de type à enfourcher selon l'une quelconque des revendications 6 à 8, où, dans une vue latérale du véhicule, une extrémité avant de la section centrale (7B2) de l'élément de garde-boue arrière (7B), ayant une largeur, mesurée dans la direction de la largeur du véhicule, plus grande que la roue arrière (6b), est située en arrière d'un point le plus arrière du pignon (5).

10. Véhicule de type à enfourcher selon l'une quelconque des revendications 1 à 9, où, dans une vue latérale du véhicule, une distance (L1) entre le point le plus arrière (7Fb) de la partie de l'élément de garde-boue avant (7F), couvrant la roue arrière (6b) par le dessus, et une ligne verticale (Y3), passant à travers un axe de rotation (J1) de la roue arrière (6b), est plus grande qu'une distance (L2) entre le point le plus avant (7Bf) de la partie de l'élément de garde-boue arrière (7B), couvrant la roue arrière (6b) par le dessus, et la ligne verticale (Y3), passant à travers l'axe de rotation (J1) de la roue arrière (6b).
